# DEMANDE DE BREVET EUROPEEN

(11) **EP 0 670 237 A1**
(43) Date de publication de la demande: **06.09.1995**
(21) Numéro de dépôt: 95420051.5
(22) Date de dépôt: 02.03.1995
(51) Int. Cl.: B60N 2/22, B60N 2/24, B60N 2/44, B60N 2/42

(54) **Siège de véhicule pour véhicules**

(30) Priorité: 02.03.1994 FR 9402610
(71) Demandeur: Cote, Daniel, F-69420 Condrieu (FR)
(72) Inventeur: Cote, Daniel, F-69420 Condrieu (FR)

(57) **Abrégé**

Système de structure de siège, particulièrement adapté à la sécurité pour véhicule roulant, avec maintient au niveau des aiselles, de la tete, et des jambes; déformable en position couchette par abaissement du centre de gravité en dessous d'un point d'appuis avant, avec un vérin fonctionant comme récupérateur de force dans un sens et nécéssitant un faible effort pour relever le siège, tout en donnant une fonction amortisseur.

## Description

1 Il faut savoir que dans les véhicules de transport, les sièges ne possèdent pas de ceinture de sécurité et l' utilisation des sièges pour se reposer pendant les voyages auguemente les risques de lésion en cas de freinage violent ou de choc En effet une personne assise reste attentive et peut se protéger en cas de choc .Par contre être endormis sur un dossier légèrement basculé peut s'avérer très dangereux en cas de décelération violente .
2 Il faut noter que la mise en couchette est souvent limité à un basculement léger du dossier à commande mécanique . S'endormir assis n'est pas une bonne position pour le corps surtout dans un véhicule roulant soumis aux vibrations . Techniquement pour un siège en couchette ,la personne ne peut le relever , si elle reste couché dessus .En automatique ,la puissance électrique nécessaire pour un équipement complet n'est pas disponible sur un véhicule standard et le coût en rapport élevé .Quant a l'utilisateur il aime choisir sa position assise ou couché et s'il faut se lever pour se mettre en couchette par ce qu'on s'endort!

La présentation consiste donc en siège pour véhicule permettant sécurité et automatisme de couchette . Ce système et ses accessoires ne ce limite pas dans la seul application cité comme exemple .
Descriptif

### SECURITE

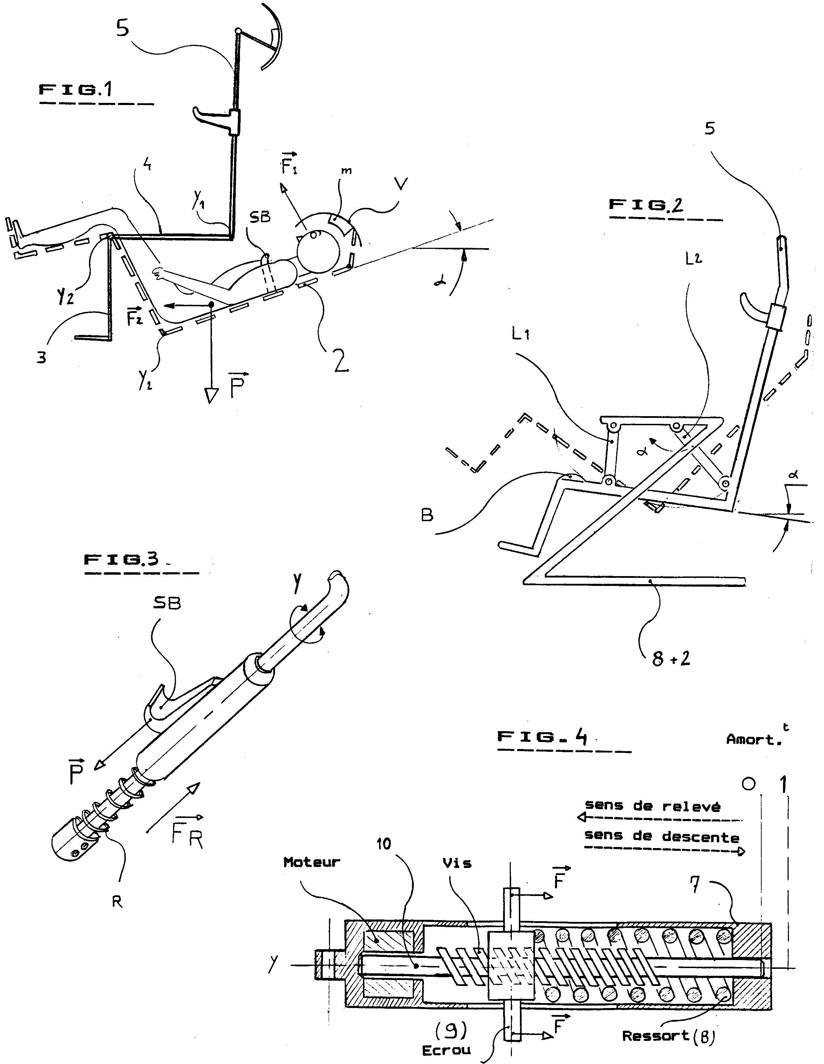

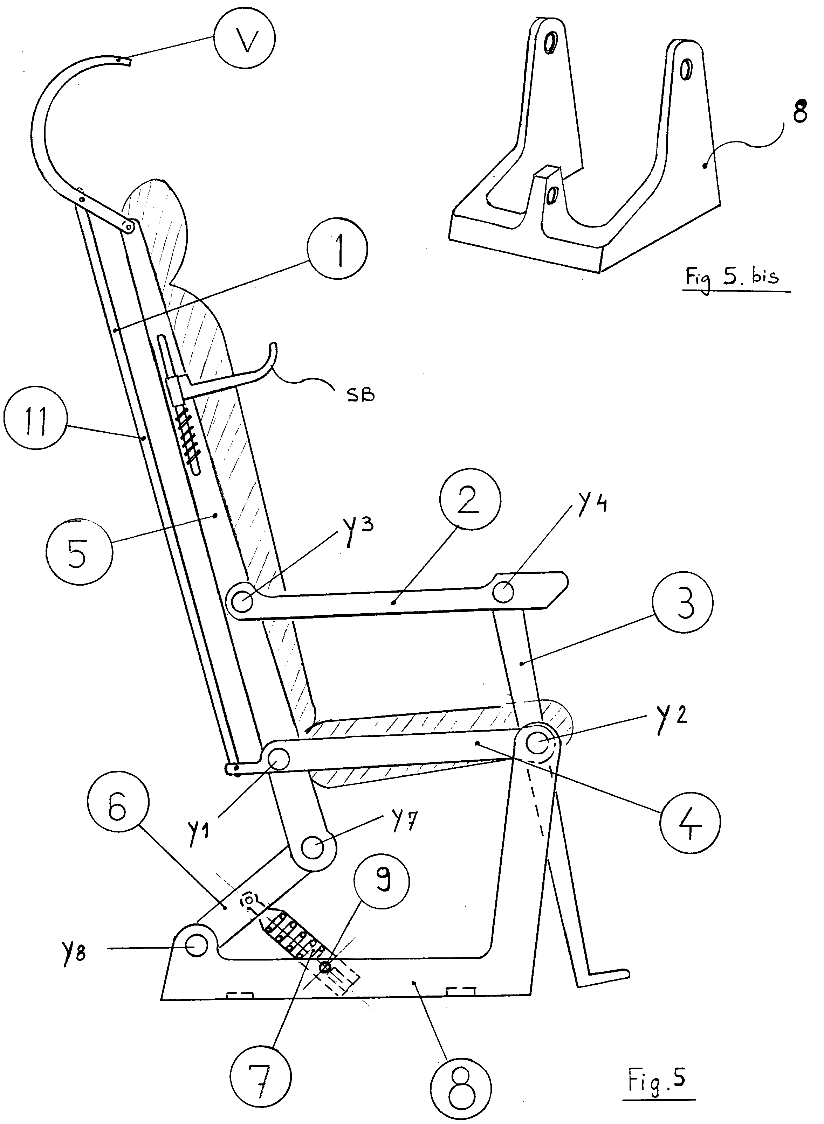

La sécurité maximum est obtenu dans la position couché , donné la plus dangereuse .( plan 1 fig. 1 ) Plusieurs accessoires ayant chacun une fonction bien définis , participent à cette action ( SB , V ) , mais le principe de base, est de déplacer le centre de gravité ( P ) de l'occupant en dessous de son point d'appuis avant le plus haut (Y2 ), afin d'avoir un couple de force à la décélération ( F2 ) positif sur l'assise , c'est à dire permettant d'utiliser l'assise comme contre force au poids du corps a la décélération ( F 2 étant à la décélération la résultante du poids du corps ) ( On notera donc une compression du corps sur l'assise ).
Le siège fait donc office de maintient du corps en cas de choc .Les accessoires de complément ont donc comme fonction de maintenir le corps fasse aux efforts qu'il subit sur lui même , suite à cette compression sur l'assise et son détaillé plus loin ..
Une variante de ce principe est le montage du siège en balançoire .(Fig.2 ) Pendu sur son support ,par un jeu de biellette ( L1 et L2 ) de longueur différente , il se met automatiquement en position sécurité en cas de choc . ( B étant un bourrelet de maintient avant .

### ACCESSOIRES

### SB

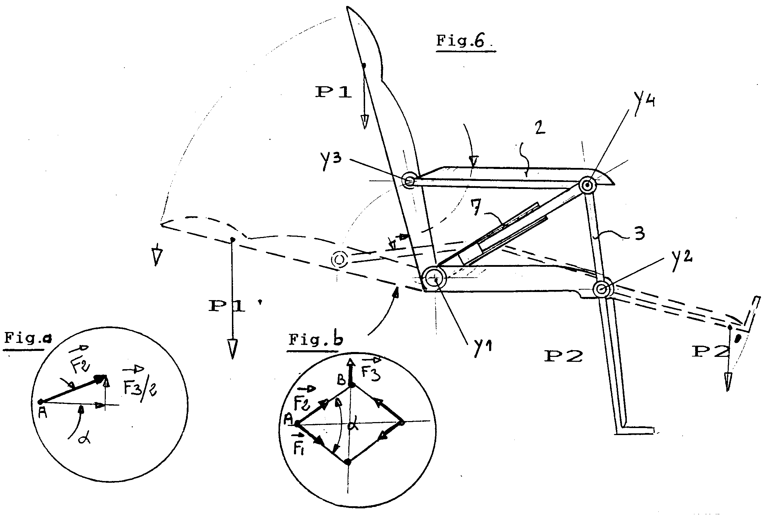

Positionné sur chaque flanc du siège( tube 1 fig.1 plan 1), ils permettent de maintenir le corps sous les aisselles .
Monté souple avec deux axes de liberté ( plan 1 fig 3 ) , ceci permet un auto réglage par individu , et un dégagement latérale pour non utilisation .
Sa forme de fourreau coulissant sur la structure latérale du siège, est maintenu en position haute par un ressort ( r, plan 1 fig.3 ). Celui ci est calculé de façon à ce qu'il autorise facilement une faible course pour le réglage en fonction des personnes , mais assure en cas de fort déplacement une contre force qui permettra de maintenir le corps sans tassement au niveau de la colonne vertébrale . . Un effet d'arc-boutement permet son autoblocage aux efforts violents ( Fig.3 : P et Fr crée un couple de force propice à l'arc-boutement sur le coulisseau . . Sa possibilitée d'utilisation en position assise donne une fonction sécurité par maintient des épaules , grâce à sa forme courbée .

### V : visière

Après le maintient du corps , reste la tête qui va subir une décélération ( le corps étant maintenus ) dangereuse pour les cervicales . C'est une visière qui assure cette fonction( plan n°1 fig.1 / plan n° 2 ; V , appelé comme cela car effectivement elle possède la propriété de masquer la lumière à la personne qui se repose mais également avec une garniture intérieure ( m ) protégera et maintiendra la tête . Sa mise en place peut ce faire automatiquement lorsque le dossier se baisse par un jeu de biellette ( Fig.5 )

### Vérin FCA

### Force compensé / Amortisseur

Le système de sécurité couchette demande un basculement complet du corps . Comme on la vue pour relever une personne couchée ,il faut beaucoup de puissance .Le système de vérin proposé permet donc d'automatiser un siège ( ou autre ) en nécessitant une faible puissance et à comme avantage de fournir un confort et une sécurité par sa fonction amortisseur .
Explication
Un vérin à motoréducteur fournis la même puissance dans les deux sens . Dans beaucoup de cas d'application le travail fournis par le vérin est maximum dans un sens et inversement maximum en négatif dans l'autre sens car comme dans le cas d'un siège , c'est le poids qui pousse à la descente . Le système consiste donc à transformer ce travail négatif du vérin à la descente en effort positif.( Fig.4 ) . Le système vérin 7 réalisé par vis écrou ( 10 et 9 ) solidaire chacune d'une partie du siège 6 et 8 possède un ressort ( B , ) intercalé entre la vis qui se déplace et l'arrière du vérin ; si bien que pendant la phase de descente ou l'écrou se déplace à droite , on aura une compression du ressort . Le calcul du ressort sera calculé pour emmagasiner une force égale au poids d' un corps sur le dossier plus , la force développé par le vérin à la descente . La force de compression du ressort sera donc proportionnelle à sa course de descente et inversement proportionnelle à celle de monté Donc en remontant la charge , le vérin sera compensé dans son effort par le ressort qui restitura sa force de compression On aura donc un vérin qui en utilisant ses deux courses en travail permet de diminuer sa charge maximum et donc sa puissance nécessaire.

### Fonction amortisseur .

Dans le plan en coupe du vérin ( Fig 4 ) , on peut voir que la vis n'est pas immobilisée en translation sur son palier par rapport au corp du vérin ( 7 ) Son déplacement est possible de la position 1 à 2 . C'est le ressort de compression qui maintient la vis en translation . En cas d'effort violent sur l'écrou , la vis répercute l'effort sur le ressort qui l'encaisse. Cette fonction permet au siège d'avoir un amortisseur sur l' assise très utile pour la sécurité , mais également pour éviter les détériorations mécanique du vérin .
Type de montage :
Le vérin peut être monté entre l'avant de l'accoudoir et l'arrière de l'assise en diagonale d'un parallélogramme réalisé par l'accoudoir et l'assise . Ce principe permet de réaliser un vérin à couple variable en fonction de la modification angulaire du dossier ( Plan n°3 ) . Celui ci correspond exactement à l'effort variable nécessaire au dossier en fonction de cette même modification angulaire .( Etude de force Fig a , b : F 3 fonction de alpha , course de déplacement de 7 sur l'axe Y , fonction de alpha .: donc le couple est fonction de alpha . Un des autres avantage de ce vérin accoudoire est de permettre de dégager le dessous du siège (très rare dans le cas de mécanisation ) et de s'adapter sur un siège existant . Ce montage peut être réalisé avec un vérin unique et des renvois d'angles .

Montage en position centrale
( Fig.5 Plan 2 ) ce type de montage permet un vérin unique et une faible course .

Structure siège .
Pour réaliser l'ensemble des fonctions demandées un siège classique ne peut les accomplir . La structure nécessite un maintient des jambes en position couché . Avec l'automatisation le relever du marche pied se fera automatiquement grâce à la biellette ( 3 Plan N°2 , ) qui étant relié à l' avant de l' assise , et à l' avant de l'accoudoire se relève quand le dossier se baisse . La réalisation d'une structure en parallélogramme déformable au niveau de l'accoudoir ( élément 2 3 4 ) relier à une traverse de dossier ( élément 5 ) qui est maintenu par la biellette du vérin et s'articule sur un pied au niveau de l'avant de l'assise , permet de réaliser une couchette sécurité .

## Revendications

**1** Structure de siège pour véhicule roulant caractérisé par une inclinaison combiné du dossier 5 et de l'assise 4 en rotation par rapport à un point fixe Y2 situé sur l'assise , des brides de maintient sous les aisselles , une visière escamotable par biellette 11 , un vérin électrique à axe flottant 10 et ressort de compression , extention B .

**2** Système selon la revendication précédente , caractérisé en ce que cette structure siège une position couchette avec centre de gravité de l'occupant positionné en dessous de son point d'appuis avant le plus haut. ( Y2 ) afin d'avoir un couple de force positif en décélération sur l'assise : F2

**3** Système de siège selon les revendications précédentes caractérisé en ce que la position de sécurité de l'assise décrite ci dessus peut être automatique en cas de décélération violente par montage pendulaire avec deux biellettes L1 et L2 et 8 et 2 en une seule pièce rigide.

**4** Système selon les revendications précédentes caractérisé en ce que le dispositif de maintient sous aisselles , est courbé jusqu'aux épaules , monté flottant en axe latérale Y , et sur ressort de compression

**5** Système selon les revendications précédentes caractérisé en ce que le dispositif de visière se rabat automatiquement à la mise en couchette par une biellette 11

**6** Système selon les revendications précédentes caractérisé en le vérin électromécanique ,, possède un ressort de compression monté entre 7 et 9

**7** Système selon la revendication précédente caractérisé ce que ce vérin possède un axe 10 monté libre en translation et maintenu en position par poussé du ressort B entre 9 la vis et le corps 7

**8** Système selon les revendications précédentes caractérisé en ce que , ce vérin peut être monté entre Y1 et Y4 en double ou en mono entre 5 et 8 par l'intermédiaire d'une biellette repère 6

**9** Système selon les revendications précédentes caractérisé en ce que la partie avant du parallélogramme d'accoudoir 3 peut être prolongé jusqu'aux pieds et permettre un relevé de ceux ci automatiquement avec la descente du dossier
